# FASCICULE DE BREVET EUROPEEN

(11) **EP 1 879 782 B1**
(45) Date de publication et mention de la délivrance du brevet: **25.05.2011**
(21) Numéro de dépôt: 06709037.3
(22) Date de dépôt: 05.01.2006
(51) Int. Cl.: B62D 25/14

(54) **TRAVERSE DE PLANCHE DE BORD DE VEHICULE AUTOMOBILE**
KRAFTFAHRZEUGARMATURENBRETTQUERGLIED
MOTOR VEHICLE DASHBOARD CROSSMEMBER

(30) Priorité: 03.02.2005 FR 0501108; 22.07.2005 FR 0507844
(43) Date de publication de la demande: 23.01.2008
(73) Titulaire: Faurecia Interieur Industrie, 92000 Nanterre (FR)
(72) Inventeur: BAUDART, Laurent, F-60530 Fresnoy en Thelle (FR)
(74) Mandataire: Domenego, Bertrand
(86) Numéro de dépôt international: PCT/FR2006/000020
(87) Numéro de publication internationale: WO 2006/082290

(56) Documents cités:
- EP-A- 1 544 086
- DE-A1- 10 360 045
- DE-U1- 29 916 470
- US-A- 5 829 666
- US-A1- 2004 154 158

## Description

La présente invention concerne une traverse de planche de bord de véhicule automobile, du type comprenant une poutre allongée formant au moins un tronçon de la traverse.

Les traverses de planche de bord de véhicule automobile sont destinées à rigidifier la caisse du véhicule automobile et à supporter des équipements du véhicule automobile, notamment une planche de bord, une colonne de direction, et des conduits d'air d'un système de climatisation.

Un example de cette technique antérieure est divulgué par le document DE 2991664704.

Les constructeurs automobiles ont des exigences des plus en plus élevées en termes de vibrations transmises dans les traverses de planche de bord et de résistance de ces traverses aux chocs.

Une solution permettant de limiter les vibrations dans une traverse consiste à augmenter l'inertie de la traverse, par exemple en augmentant l'épaisseur de la traverse, ce qui se traduit néanmoins par une augmentation de la masse.

Une solution permettant d'améliorer la résistance aux chocs d'une traverse consiste à modifier la section de la traverse. Cependant, la traverse ainsi obtenue possède généralement une géométrie complexe rendant sa fabrication plus compliquée.

Un but de la présente invention est de proposer une traverse de planche de bord qui puisse être fabriquée facilement.

A cet effet, l'invention propose une traverse de planche de bord du type précité, caractérisé en ce que la poutre est formée à partir d'un profilé ouvert obtenu par cintrage longitudinal d'une bande métallique pour obtenir un profilé de section déterminée.

Selon d'autres modes de réalisation, la traverse de planche de bord comprend une ou plusieurs des caractéristiques suivantes, prise(s) isolément ou selon toutes les combinaisons techniquement possible :
- le profilé présente une section définissant au moins deux canaux juxtaposés, s'étendant parallèlement l'un à l'autre suivant la longueur du profilé ;
- les canaux présentent des sections fermées ;
- au moins un canal présente une section ouverte, et au moins un canal présente une section fermée ;
- le canal ouvert est délimité par une portion à section en « U » du profilé, et le canal fermé est délimité par une portion à section en « O » du profilé ;
- le canal ouvert et le canal fermé sont délimités par au moins une paroi commune ;
- le profilé présente, dans un plan de section transversale, une épaisseur variable ; et
- la traverse comprend, sur un autre tronçon de la traverse, une poutre intermédiaire fixée à ladite poutre.

L'invention concerne également un ensemble comprenant une traverse telle que définie ci-dessus, et au moins un conduit d'air d'un système de climatisation du véhicule automobile, le ou chaque conduit d'air s'étendant dans un canal ouvert de la poutre de la traverse formant cavité de réception pour le ou chaque conduit d'air.

L'invention concerne également un procédé de fabrication d'une poutre de traverse de planche de bord de véhicule automobile, dans lequel on forme un profilé à partir d'une bande ou d'un flan métallique que l'on plie selon une pluralité de lignes longitudinales.

Selon d'autres modes de mise en oeuvre, le procédé comprend une ou plusieurs des caractéristiques suivantes, prise(s) isolément ou selon toutes les combinaisons techniquement possibles :
- on referme au moins en partie le profilé, de façon à obtenir une section définissant au moins un canal fermé, en utilisant un moyen de liaison continu ou discontinu, par exemple du type agrafage, pliage sertissage, clinchage, soudage, pendant le processus de mise en forme du profilé ou après.
- on forme un profilé à partir d'une bande métallique que l'on déplace longitudinalement en continu à travers une machine à cintrer à rouleaux de façon à cintrer progressivement la bande métallique suivant des lignes longitudinales pour obtenir un profilé de section déterminée, et on prélève un tronçon du profilé pour former la poutre.
- on referme le profilé au moyen d'une soudure longitudinale formée en continu sur le profilé défilant longitudinalement en sortie de la machine à cintrer, avant de tronçonner la poutre.
- on forme le profilé à partir d'un flan découpé au format de la poutre, que l'on fait passer à travers une succession de presses d'emboutissage de façon à plier progressivement le flan selon des lignes de pliage pour obtenir un profilé de section déterminée, qui constitue la poutre.
- on ménage des ouvertures réparties suivant au moins une ligne longitudinale, sur la bande, avant de cintrer la bande, de façon à obtenir une poutre munis d'ouvertures réparties sur sa longueur ;
- la bande est formée par au moins deux bandes d'épaisseur différentes fixées mutuellement suivant leurs bords longitudinaux, de sorte que le profilé présente, dans un plan de section, une épaisseur variable.

L'invention et ses avantages seront mieux compris à la lecture de la description qui va suivre, donnée uniquement à titre d'exemple, et faite en se référant aux dessins annexés, sur lesquels :
- la figure 1 est une vue arrière d'une traverse de planche de bord conforme à l'invention, recevant des conduits d'air d'un système de climatisation ;
- la figure 2 est une vue en coupe selon II-II de la traverse de la figure 1 ;
- la figure 3 est une vue en perspective éclatée d'une poutre de la traverse de la figure 1 et des conduits d'air de la figure 1;
- la figure 4 est une vue de dessus d'une traverse selon une variante de la traverse de la figure 1 ;
- la figure 5 est une vue analogue à la figure 3, illustrant une poutre d'une traverse selon une variante de la traverse de la figure 3;
- la figure 6 est une vue schématique d'une installation de profilage permettant de former une poutre pour une traverse conforme à l'invention à partir d'une bande métallique ;
- les figures 7A à 7F sont des vues en coupe d'une bande métallique lors d'étapes successives de pliage de la bande métallique dans l'installation de la figure 6, pour obtenir la poutre des figures 1 à 3 ;
- la figure 8 est une vue analogue à la figure 3, représentant une poutre d'une traverse selon une variante de la traverse de la figure 3 ;
- les figures 9A à 9E illustrent des sections de profilés pouvant être obtenus à l'aide d'une installation telle que celle de la figure 6 ;
- la figure 10 est une vue partielle en perspective du côté gauche d'une variante de la traverse de la figure 4 ;
- la figure 11A est une vue partielle, en coupe dans un plan perpendiculaire à la direction L, d'un côté avant du canal fermé 22 de la traverse de la figure 3, montrant une variante de réalisation des perçages 74 ; et
- la figure 11B est une vue en coupe selon les flèches XIB de la figure 11A.
- la figure 12 est une représentation schématique d'une installation de fabrication d'une poutre par transfert entre plusieurs machines d'emboutissage.
- les figures 13A à 13F sont des représentations schématiques du procédé de fabrication d'une poutre par une succession d'emboutissages.

Dans la suite de la description, les orientations utilisées sont les orientations usuelles des véhicules automobiles.

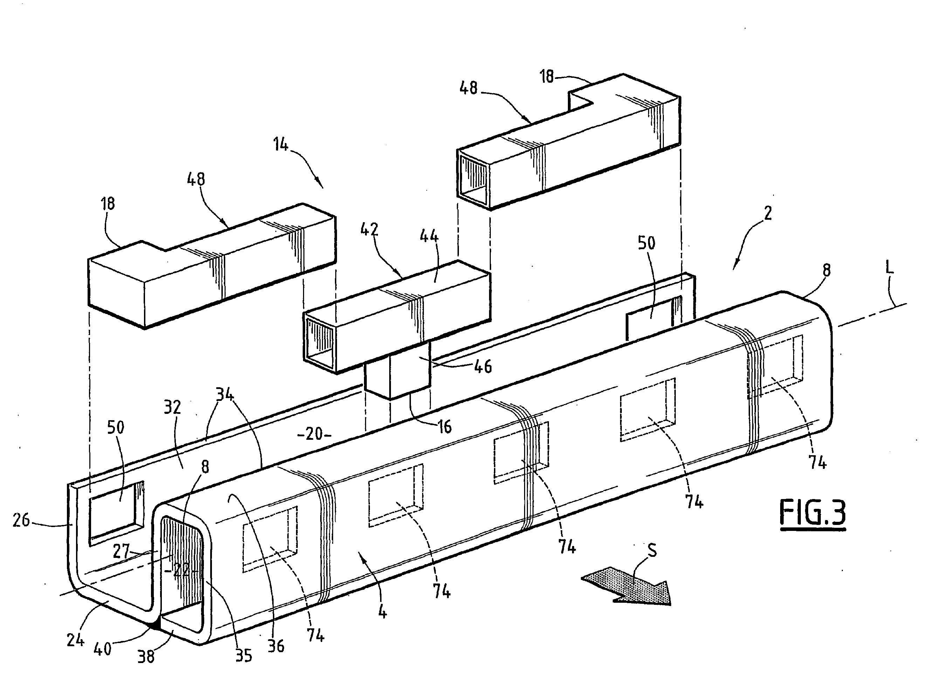

Ainsi, les termes « haut », « bas », « avant », « arrière », « droite », « gauche », « horizontal », « vertical » et « latéral » s'entendent par rapport à la position du conducteur et au sens d'avancement du véhicule en marche avant, illustré par la flèche S sur les figures 3, 4 et 5.

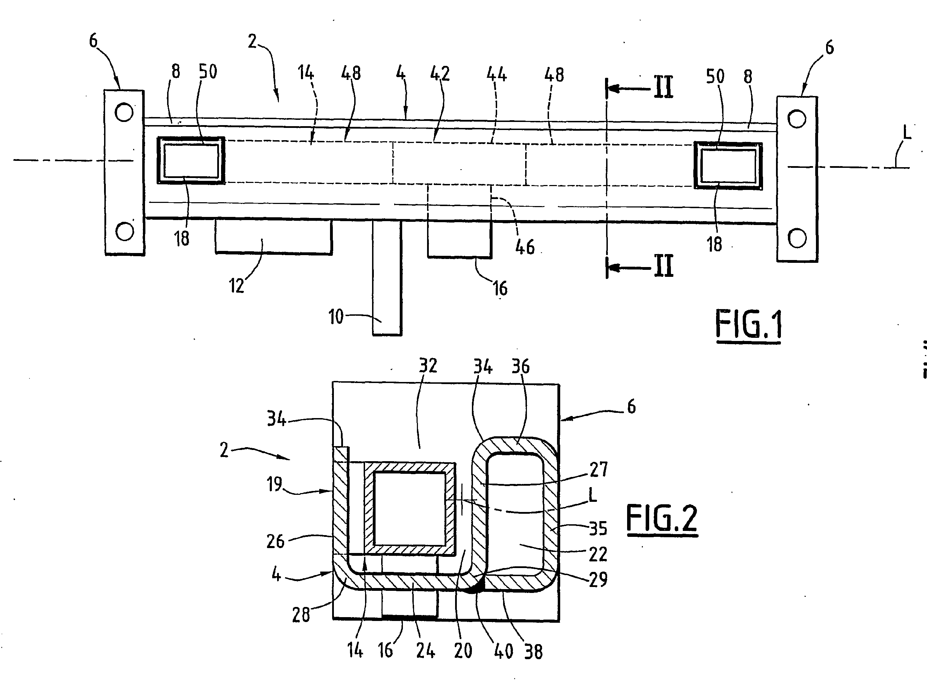

Tel que représenté sur la figure 1, une traverse 2 de planche de bord comprend :
- une poutre 4 allongée s'étendant suivant une ligne L. La ligne L est par exemple rectiligne ;
- des dispositifs de fixation 6 fixés sur les extrémités 8 de la poutre 4 ;
- une jambe de force 10 fixée sur la poutre 4 à distance de ses extrémités 8 ; et
- un support 12 de colonne de direction fixé sur la poutre 4 entre la jambe de force 10 et l'extrémité 8 gauche de la poutre 4.

Les dispositifs de fixation 6, la jambe de force 10, et le support 12 sont classiques et ne seront pas décrits en détail par la suite.

Les dispositifs de fixation 6 sont destinés à être fixés sur des montants A d'un véhicule automobile, de sorte que la poutre 4 s'étende entre ces montants A.

La jambe de force 10 est destinée à être fixée par son extrémité inférieure sur un tunnel central, non représenté, du véhicule automobile.

Le support 12 est destiné à supporter une colonne de direction, non représentée, portant à son extrémité arrière et supérieure un volant, et reliée à son extrémité avant et inférieure à un dispositif de braquage des roues du véhicule automobile.

Un circuit d'air 14 est fixé sur la poutre 4. Le circuit d'air 14 comprend une prise d'air 16 destinée à être reliée à une unité de climatisation, non représentée, comprenant des moyens de chauffage et/ou de refroidissement de l'air, et des moyens pour pulser de l'air dans le circuit 14 par la prise 16.

Le circuit d'air 14 comprend des sorties 18 destinées à être raccordées à des aérateurs, non représentés, répartis dans l'habitacle du véhicule automobile.

Tel qu'illustré sur la figure 2, la poutre 4 comprend un profilé 19 creux s'étendant suivant la ligne L, et présentant une section constante suivant la ligne L. Le profilé 19 comprend deux canaux 20, 22 juxtaposés s'étendant parallèlement l'un à l'autre suivant la ligne L, c'est-à-dire perpendiculairement au plan de la figure 2.

Plus précisément, la poutre 4 comprend un premier canal 20 ouvert et un deuxième canal 22 fermé.

Le premier canal 20 est délimité par une portion du profilé 19 présentant une section sensiblement en « U » ouverte vers le haut. Le premier canal 20 est délimité par une base 24, une aile arrière 26 et une aile avant 27. Les ailes 26, 27 sont parallèles et s'étendent verticalement vers le haut à partir de la base 24. Les ailes 26, 27 sont reliées à la base 24 par l'intermédiaire de portions de liaison arrondies, respectivement arrière 28 et avant 29. Le premier canal 20 présente une ouverture supérieure 32 s'étendant suivant la longueur du profilé 19, et délimitée par les extrémités supérieures 34 des ailes 26, 27.

Le deuxième canal 22 est délimité par une portion du profilé 19 présentant une section fermée sensiblement en « O » de forme rectangulaire. Le deuxième canal 22 est délimité par l'aile avant 27, par une branche avant 35 en C, située à l'avant de l'aile avant 27, par un tronçon supérieur 36, et par un tronçon inférieur 38. Le bord d'extrémité du tronçon 38 est fixé par un cordon de soudure 40 sur la portion de liaison avant 29.

Les canaux 20 et 22 sont délimités par une paroi commune, à savoir l'aile 27, qui forme donc une séparation entre les canaux 20 et 22.

Le profilé 19 est monobloc et présente ainsi une section sensiblement en « 6 ».

Le circuit d'air 14 est reçu à l'intérieur du canal ouvert 20.

Comme on peut mieux voir sur la figure 3, le circuit d'air 14 comprend un raccord tubulaire en T 42 comprenant un bras 44 et un pied 46. Une ouverture inférieure du pied 46 définit la prise d'air 16.

Le circuit 14 comprend deux conduits latéraux 48. Chaque conduit latéral 48 est raccordé à une extrémité du bras 44 et s'étend latéralement vers l'extérieur à partir de celle-ci. A son extrémité opposée, chaque conduit 48 est coudé vers l'arrière et présente une ouverture définissant une sortie 18.

Le circuit 14, après assemblage du raccord 42 et des conduits 48, est inséré facilement dans le canal ouvert 20 par l'ouverture 32.

Le raccord tubulaire 42 et les conduits 48 sont montés à force dans le canal ouvert 20 ou sont fixés dans ce canal à l'aide de moyens tels que de la colle ou des agrafes.

L'aile arrière 26 présente des ouvertures 50 situées à proximité des extrémités 8 de la poutre 4, en regard desquelles débouchent les sorties 18.

La base 24 comprend, à distance de chacune des extrémités 8, une ouverture, non visible, traversée par le pied 46 en vue de son raccordement au système de climatisation (non représenté).

Après assemblage, on aboutit à la configuration représentée sur les figures 1 et 2.

La poutre 4, présentant une section définissant un canal ouvert 20 de réception du circuit d'air 14, permet de recevoir le circuit d'air 14 de façon compacte, avec un montage facile.

La section définissant un canal fermé 22 confère à la poutre 4 une rigidité importante et une résistance aux chocs élevée.

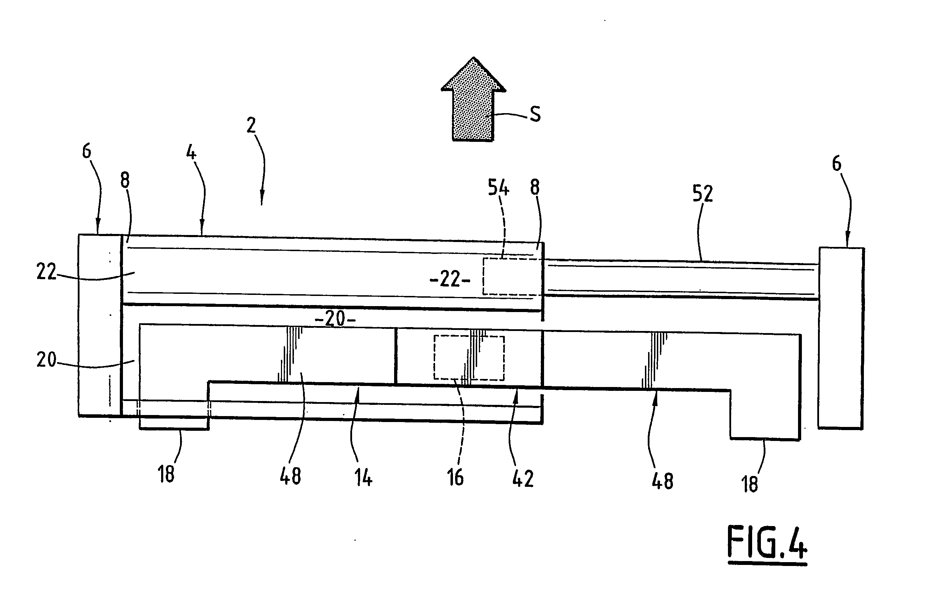

Tel qu'illustré sur la figure 4, en variante, la poutre 4 constitue seulement un tronçon de longueur limitée de la traverse 2. L'extrémité 8 gauche de la poutre 4 est fixée sur un dispositif de fixation 6, et l'extrémité 8 droite de la poutre 4 se situe à distance du dispositif de fixation 6 droit.

Une poutre intermédiaire 52 s'étend entre l'extrémité 8 droite de la poutre 4 et le dispositif de fixation 6. La poutre intermédiaire 52 présente une extrémité 54, représentée en pointillé, insérée sur une longueur limitée à l'intérieur du canal fermé 22. La poutre 52 est fixée sur la poutre 4 en étant insérée à force, ou par tous autres moyens appropriés, tels que le collage, le vissage ou le soudage.

Tel que représenté sur la figure 4, seul un conduit 48 gauche et le raccord 42 sont reçus à l'intérieur du canal ouvert 20, et le conduit 48 droit se situe à l'extérieur. En variante, la poutre 4 présente une longueur plus réduite, de sorte que seul le conduit 48 gauche est reçu dans le canal ouvert 20.

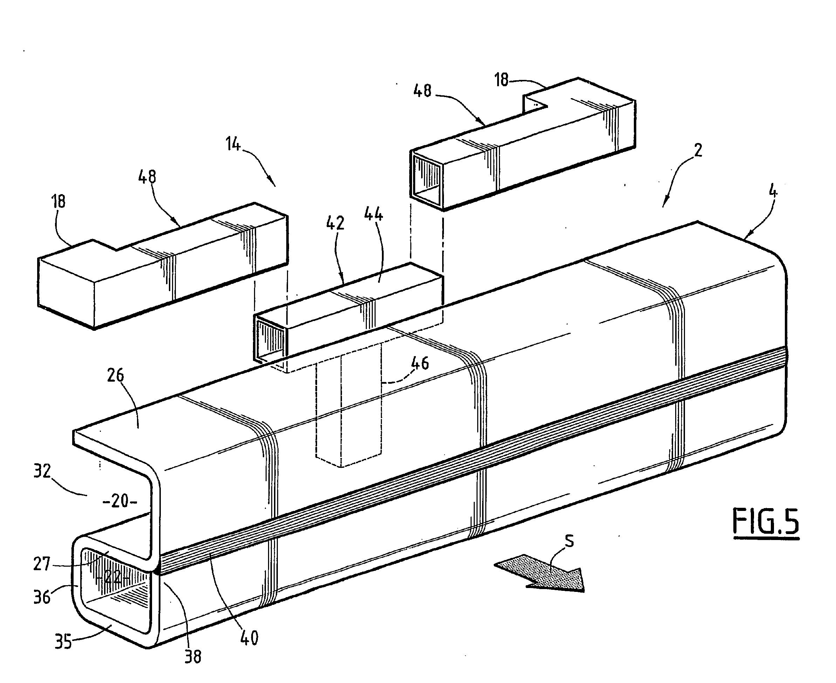

Dans une variante illustrée sur la figure 5, l'ouverture 32 du canal ouvert 20 est dirigée horizontalement vers l'arrière. Le circuit 14 est disposé de façon que les sorties 18 soient dirigées horizontalement vers l'arrière à travers l'ouverture 32. L'aile 27 et la portion en C 35 du profilé 19, délimitant le canal fermé 22, sont munies d'orifices, non visibles, alignés, permettant le passage du pied 46 du raccord 42 en T en vue de son raccordement au système de climatisation. Pour faciliter le montage, le pied 46 et le bras 44 du raccord en T 42 sont montés de façon amovible l'un sur l'autre.

En variante, la poutre 4 comprend au moins deux canaux ouverts et/ou au moins deux canaux fermés.

De façon alternative ou optionnelle, le canal ouvert 20 est utilisé pour recevoir d'autres équipements du véhicule automobile, tels que des câblages électriques.

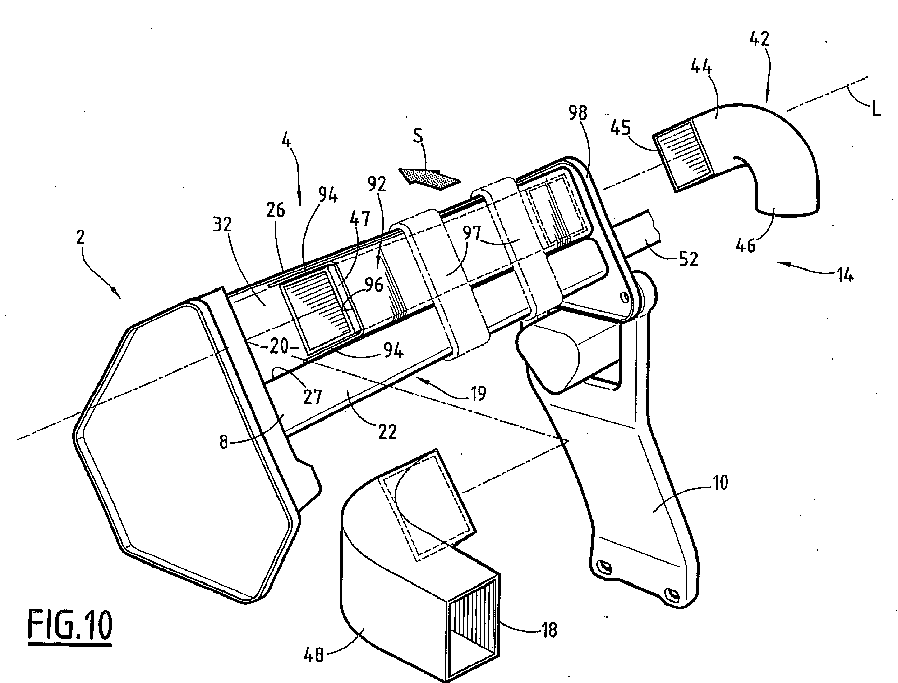

La traverse représentée sur la figure 10 est une variante de celle de la figure 4. Seules les différences entre ces traverses seront décrites ci-dessous.

La poutre 4 de la traverse de la figure 10 comprend une pièce de renfort 92 longitudinale à section en U dans un plan perpendiculaire à la direction longitudinale, engagée dans le canal 20. Cette pièce est disposée dans la zone du support 12 de colonne de direction de façon à rigidifier cette zone. Cette pièce présente deux ailes parallèles et opposées 94 et un fond 96 réunissant les deux ailes 94. Elle est disposée dans le canal 20 de façon à ce que les ailes 94 soient plaquées contre les ailes avant et arrière 26 et 27 délimitant le canal 20, et que le fond 96 ferme partiellement l'ouverture 32 du canal 20.

La pièce de renfort 92 est plus courte que le canal 20 suivant la direction longitudinale L, de sorte que l'ouverture 32 du canal 20 est dégagée à l'extrémité 8 gauche.

La pièce de renfort 92 est soudée sur le profilé 19 ou fixée à l'aide de barrettes 97 vissées ou clippées sur le profilé 19, ces barrettes 97 maintenant la pièce 92 en pression au fond du canal ouvert 20 (voir figure 10).

Du fait de la présence de la pièce de renfort 92, il n'est plus possible d'insérer les éléments du circuit d'air 14 dans le canal 20 par la face ouverte 32.

Pour pallier cette difficulté, le circuit d'air 14 comprend un conduit de liaison 47 raccordant le conduit latéral gauche 48 à une extrémité 45 du bras 44 du raccord tubulaire 42. Par ailleurs, le raccord tubulaire 42 est disposé de façon à ce que seule l'extrémité 45 du bras 44 soit engagée dans le canal ouvert 20, le pied 46 restant en dehors du canal ouvert 20 et s'étendant, à partir du bout de la poutre 4, vers l'arrière et vers le bas en s'enroulant autour de la poutre intermédiaire 52.

Les éléments du circuit d'air 14 sont montés dans le canal ouvert 20 de la façon suivante. Le conduit de liaison 47 est d'abord glissé longitudinalement dans le canal 20, à partir de l'extrémité droite de ce canal, jusqu'à ce que ce conduit soit positionné longitudinalement sous la pièce de renfort 92. Le conduit latéral 48 est introduit par la portion gauche de la face ouverte 32, restée libre, et raccordée au conduit de liaison 47 par tous moyens adaptés. Ensuite, le raccord tubulaire 42 est mis en place, l'extrémité 45 du bras 44 étant introduite dans le canal ouvert 20 et raccordée au conduit intermédiaire 47. Enfin, le conduit latéral 48 droit est raccordé au bras 44.

Selon un autre aspect original de la variante de réalisation de la figure. 10, la poutre 4 est légèrement inclinée par rapport à la verticale, le canal ouvert 20 étant disposé relativement plus haut et plus vers l'avant du véhicule, et le canal fermé 22 étant disposé relativement plus bas et plus vers l'arrière.

La face ouverte 32 est tournée vers le haut et vers l'arrière. On voit sur la figure 10 que, avec cette orientation de la poutre 4, la partie coudée du conduit 48 sort du canal 20 par la face ouverte 32 et repose sur une face extérieure du canal fermé 22, le canal maintenant en position la partie coudée.

Selon encore un autre aspect original de la variante de réalisation de la figure 10, la traverse comprend une plaque de fixation 98 s'étendant dans un plan perpendiculaire à la direction L, sur laquelle la jambe de force 10 est rigidement fixée. La plaque 98 est disposée contre une extrémité de la poutre 4, cette extrémité étant soudée sur une grande face de la plaque 98. La poutre intermédiaire 52 n'est pas engagée dans le canal fermé 22, son extrémité étant soudée sur la grande face de la plaque 98 opposée à la poutre 4.

La pièce de renfort 92 s'étend jusqu'à la plaque 98. Cette plaque 98 est percée d'un orifice disposé dans le prolongement du canal ouvert 20 pour permettre l'introduction du conduit de liaison 47.

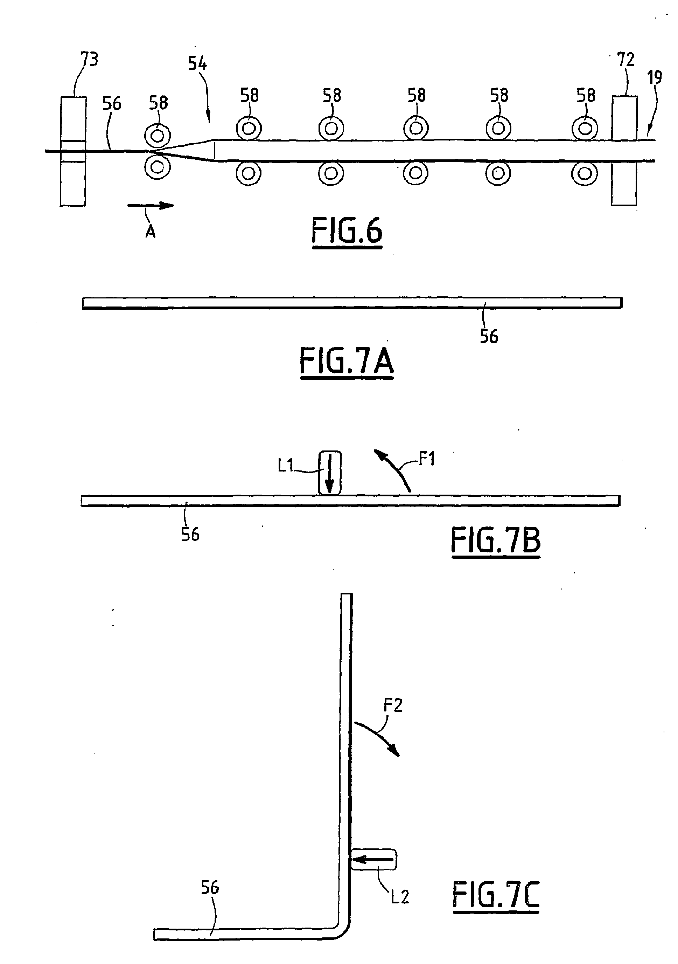

La figure 6 illustre de façon schématique une machine à rouleaux 54 de profilage par cintrage longitudinal, permettant de plier, par étapes successives, une bande métallique 56 suivant des lignes de pliure longitudinales, afin d'obtenir le profilé 19.

A l'entrée de l'installation 54, la bande métallique 56, à plat, défile suivant sa longueur, selon la direction A. A la sortie, la bande 56 a été configurée pour former le profilé 19°.

Entre son entrée et sa sortie, la machine 54 comprend une pluralité de postes 58, chaque poste 58 comprenant des rouleaux entre lesquels passe la bande 56, et dont les profils permettent de réaliser une étape de pliage.

Les différentes étapes de pliage de la bande 56 vont maintenant être décrites en référence aux figures 7A à 7F, illustrant la bande 56 en coupe dans un plan perpendiculaire à sa longueur.

Sur ces figures 7A à 7F, les lignes de pliures s'étendent perpendiculairement au plan des figures 7A à 7F et leurs emplacements sont désignés par des flèches L1 à L5 correspondantes. Les directions de pliages associées sont illustrées par des flèches F1 à F5.

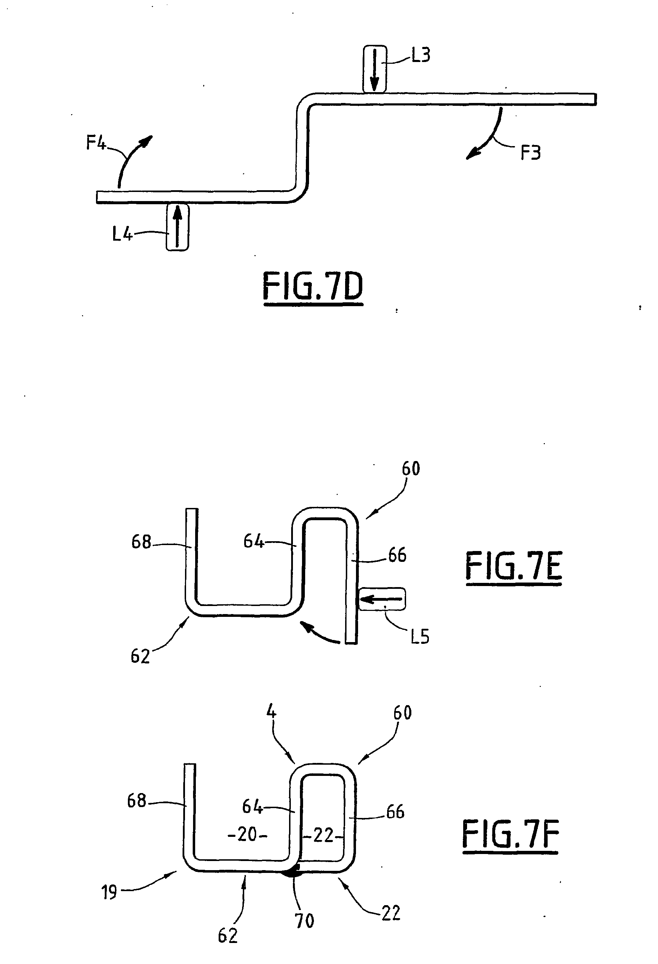

Initialement (figure 7A), la bande 56 est plane. La bande 56 est ensuite pliée, par étapes successives :
- suivant une ligne L1 (figure 7B), formant ainsi un profil « L » (figure 7C) ;
- suivant une ligne L2 (figure 7C), formant ainsi un profil en manivelle (figure 7D) ; et
- suivant des lignes L3 et L4 (figure 7D), formant ainsi un profil en « S » (figure 7E) ayant une première boucle 60 et une deuxième boucle 62, chacune sensiblement en « U », les boucles 60, 62 présentant une branche de liaison 64 commune, et une branche libre 66 de la première boucle 60 étant plus longue que la branche libre 68 de la deuxième boucle 62.

Ensuite, une extrémité de la branche libre 66 de la première boucle 60 est repliée en direction de la branche de liaison 64 suivant une ligne L5 (figure 7E). Un profilé ouvert de section analogue à celle du profilé 19 est obtenu. Ensuite, ce profilé est refermé en fixant, au moyen d'un cordon de soudure 70, l'extrémité de la branche 66 sur la branche de liaison 64 de façon à refermer la première boucle 60.

On obtient ainsi le profilé 19 à section en « 6 » (figure 7F). Le canal ouvert 20 est défini par la deuxième boucle 62 ouverte, et le canal fermé 22 est défini par la première boucle 60 refermée.

Le cordon de soudure 70 est continu ou formé de points discrets espacés entre eux suivant la longueur de la bande 56.

Ensuite, le profilé 19 est débité en tronçons de longueur adéquate, chaque tronçon formant une poutre 4.

Enfin, les bords longitudinaux libres du profilé 19 subissent un traitement visant à les rendre non coupants. Ils sont, par exemple, pliés vers l'intérieur ou l'extérieur du profilé, sur une largeur de quelques millimètres.

On notera que, pour le mode de réalisation de la figure 10, la face ouverte 32 du canal 20 peut être obturée localement lors de l'opération de fabrication de la poutre 4 par cintrage. La face ouverte est, dans ce cas, partiellement obturée en rabattant un volet préalablement ménagé sur un bord de la bande 56. Ce volet remplace la pièce rapportée 92.

Avantageusement, le cordon de soudure 70 est formé en continu à l'aide d'une machine à souder 72 disposée en aval de l'installation 54 de pliage, avant le tronçonnage en différentes poutres 4 (figure 6).

En variante, le tronçon, après avoir été débité, subit un nouveau cintrage pour conférer à ce tronçon une forme arquée quand on le suit longitudinalement.

Par ailleurs, des ouvertures 50 telles qu'illustrées sur la figure 3 sont avantageusement ménagées dans la poutre 4 lors de sa fabrication dans l'installation 54.

A cet effet, une machine de perçage 73 est disposée en amont de l'installation 54, de façon que la bande 56 défile à plat dans la machine de perçage 73, cette dernière formant des ouvertures espacées de façon adéquate suivant la longueur de la bande 56, avant le pliage longitudinal de la bande 56.

En variante, et comme illustré en pointillés sur la figure 3, il est possible de ménager, dans la poutre 4, des perçages 74 répartis le long de la poutre 4. Les perçages 74 permettent d'alléger la poutre 4. Les perçages 74 sont par exemple ménagés dans la branche avant 35 du profilé 19. Le canal fermé 22 conserve une section générale fermée rigide.

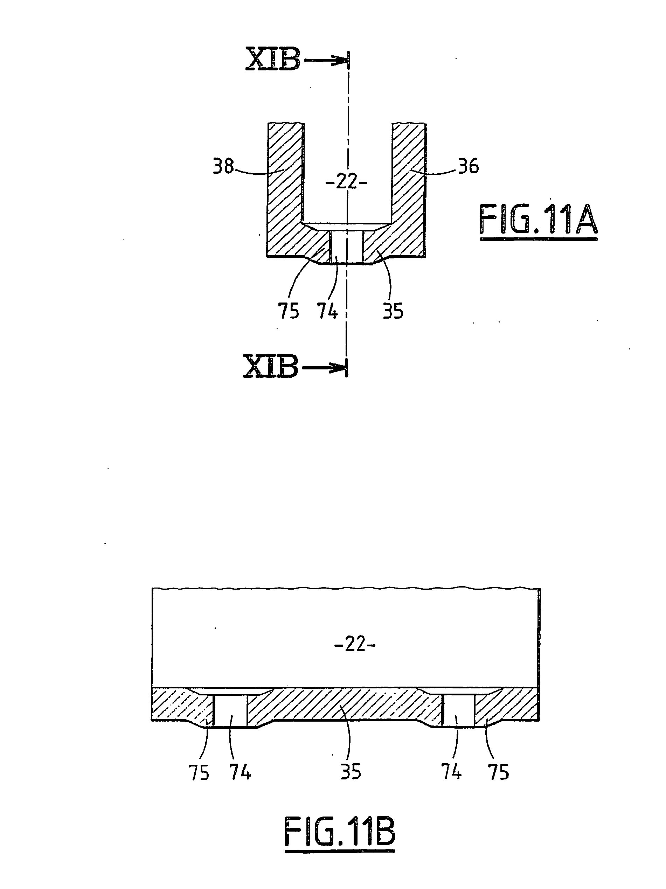

En variante, les perçages 74 peuvent être réalisés au centre de zones embouties 75, comme le montrent les figures 11A et 11B, pour renforcer localement la poutre 4 et pour des raisons d'accessibilité.

Ces zones embouties 75 sont réalisées dans la bande 56 avant que les perçages 74 soient pratiqués, ou en même temps.

Par ailleurs, ces zones embouties doivent présenter des dimensions telles qu'elles dégagent un espace suffisant le long des lignes de pliage pour pouvoir positionner et faire fonctionner la machine à rouleaux 54.

On notera que les perçages 74 ne sont pas nécessairement alignés parallèlement à la ligne L et peuvent être répartis différemment en fonction des besoins. Ces perçages servent en particulier à positionner et maintenir des faisceaux de câbles électriques, les positions des perçages 74 pouvant être choisies en fonction du cheminement des faisceaux.

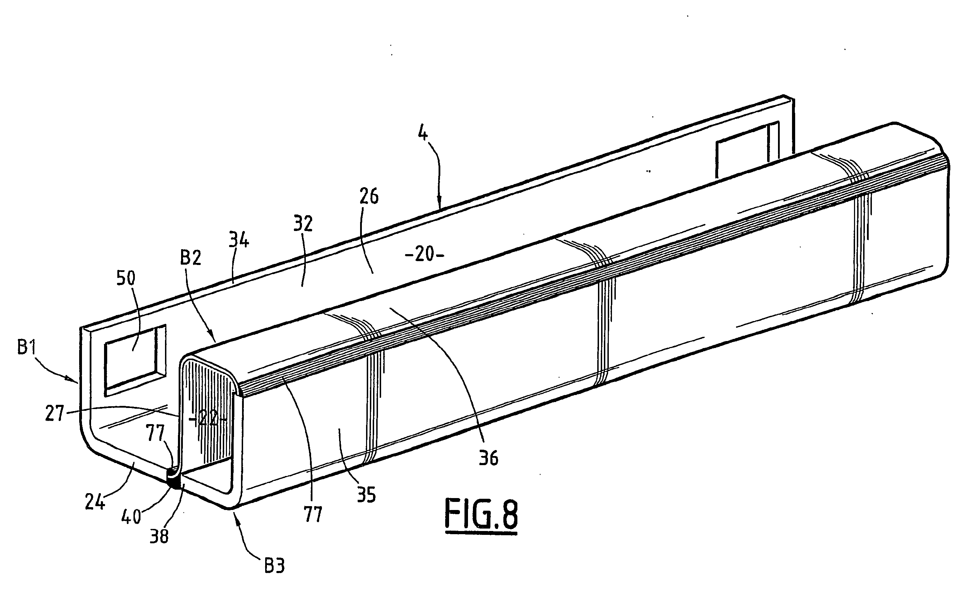

Dans une variante illustrée sur la figure 8, où seule la poutre 4 est représentée, la poutre 4 présente, dans un plan de section transversale, une épaisseur variable. Plus précisément, la poutre 4 présente une aile 27 et un tronçon supérieur 36 plus minces que le reste de la section de la poutre 4.

Ceci permet d'alléger la poutre 4, en diminuant l'épaisseur dans les zones moins sollicitées, et en maintenant l'épaisseur dans les zones plus sollicités. Par exemple, une épaisseur importante est nécessaire dans des zones de fixation de la jambe de force 10 et du support de colonne de direction 12.

Une telle poutre 4 est formée facilement en soudant des bandes métalliques B1, B2, B3 d'épaisseurs différentes suivant leurs bords longitudinaux au moyen de cordons de soudure 77, puis en appliquant le procédé de fabrication de profilage par pliage longitudinal décrit précédemment à la bande constituée par l'assemblage des bandes B1, B2 et B3. En variante, deux bandes B1 et B2 peuvent suffire.

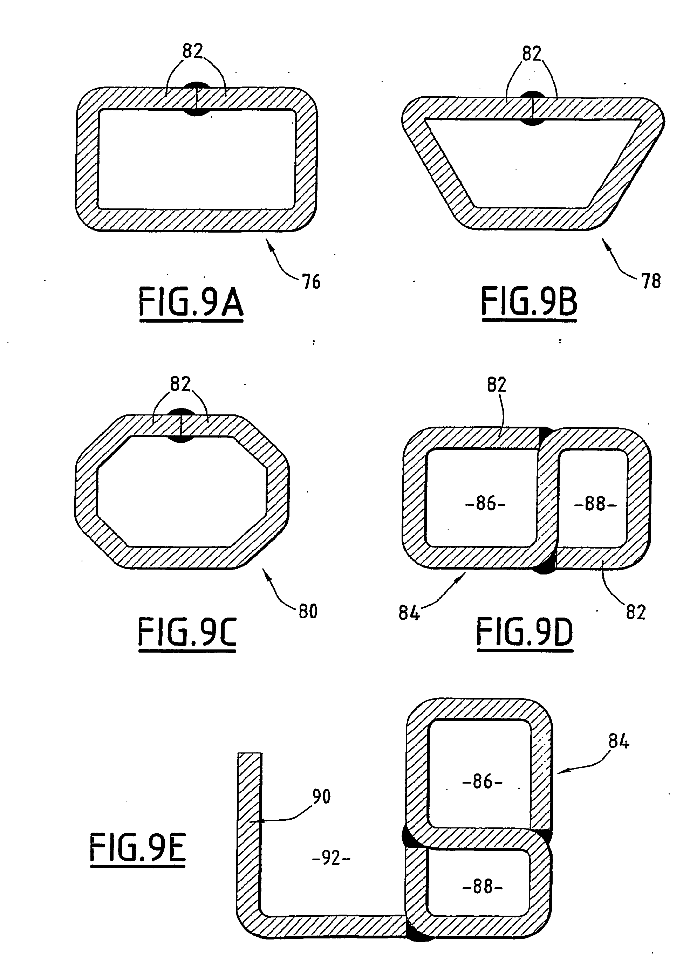

Le procédé de fabrication permet de fabriquer facilement des profilés de sections variables et complexes. Les figures 9A à 9C illustrent différents profilés 76, 78, 80 à section polygonale fermée, respectivement en rectangle, en trapèze isocèle, en octogone. Chaque profilé est formé par cintrage longitudinal d'une bande, permettant d'obtenir un profilé à section ouverte, et fixation, par un cordon de soudure continu ou à points discrets, des bords longitudinaux 82 de la bande, pour refermer la section du profilé. En variante, chaque profilé 76, 78, 80 est ouvert, et les bords longitudinaux 82 de chaque profilé 76, 78, 80, sont adjacents ou jointifs, mais ne sont pas fixés les uns sur les autres.

La figure 9D illustre un profilé 84 analogue à celui de la figure 1, mais présentant une section sensiblement en « 8 » définissant deux canaux juxtaposés 86, 88 fermés. Ce profilé 84 a été formé par exemple par cintrage longitudinal d'une bande de la façon indiquée pour les figures 7A à 7F, mais en refermant ensuite les deux boucles du « S ». En variante, les bords 82 longitudinaux du profilé 84 ne sont pas soudés.

La figure 9E illustre une variante du profilé de la figure 9D, comprenant un élément longitudinal à profil en L 90 rapporté sur le profilé 84 de façon à créer un canal ouvert en U 92 s'étendant parallèlement aux deux canaux fermés 86 et 88.

Un bord longitudinal de l'élément 90 est soudé dans ce but le long d'un angle du profilé 84, de telle sorte qu'une première aile de l'élément 90 s'étend longitudinalement en regard du profilé 84 et constitue un côté extérieur du canal ouvert 92, la seconde aile de l'élément 90 constituant le fond du canal 90 et réunissant la première aile au profilé 84. On obtient ainsi une poutre 4 particulièrement rigide.

La poutre illustrée sur les figures présente des avantages en termes de rigidité et d'intégration des équipements du véhicule automobile. Une telle poutre est, en variante, obtenue par tout procédé de fabrication adéquat, par exemple par extrusion dans une filière puis perçage des ouvertures nécessaires.

Une poutre 4 est, en variante, obtenue par juxtaposition de deux profilés distincts, parallèlement l'un à l'autre suivant la ligne L, et fixation l'un à l'autre sur leur longueur.

La poutre 4 peut être fabriquée par d'autres procédés que le procédé de cintrage en continu tel qu'il vient d'être décrit.

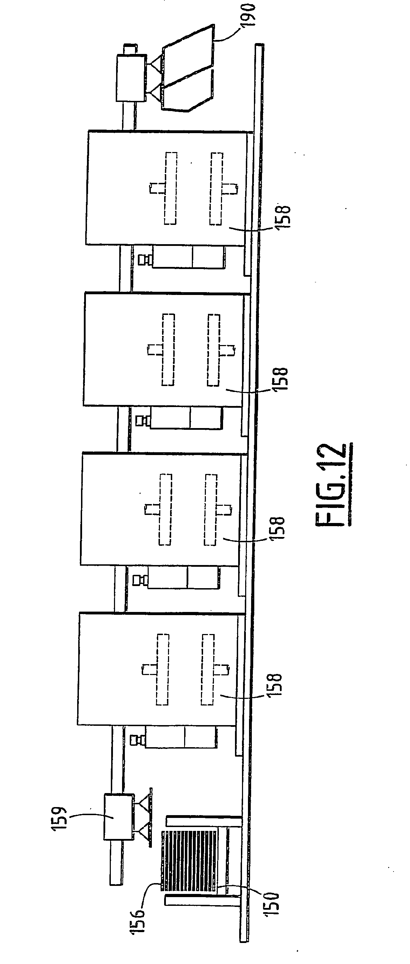

En particulier, la poutre peut être fabriquée sur une ligne de fabrication constituée d'une succession de presses d'emboutissage 158, comportant un moyen de transfert 159 d'une presse à l'autre (Figure 12).

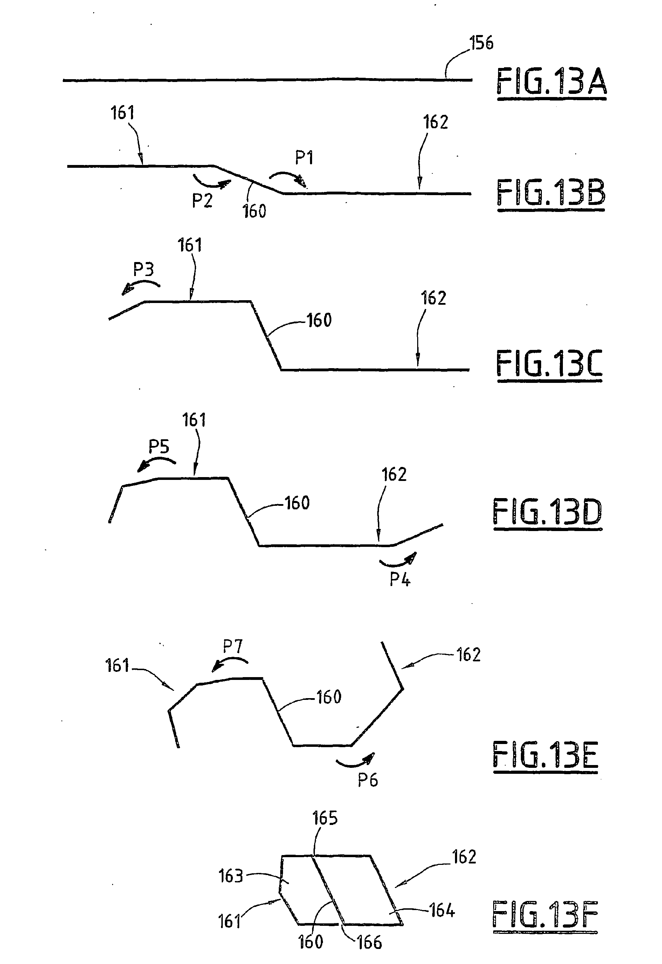

Selon ce procédé, on dispose en tête de la ligne de fabrication un empilement 150 de flans 156 prédécoupés à la longueur de la poutre. Un flan, prélevé par le moyen de transfert 159 est amené dans une première presse d'emboutissage pour effectuer une première opération de pliage, par exemple selon deux premières lignes de pliage longitudinales P1 et P2 (Figure 13A), pour former un profilé en forme de Z comprenant une âme centrale 160 et deux ailes latérales 161 et 162. Le profilé est alors transféré sur une deuxième presse pour former un troisième pli P3 (Figure 13B) dans l'aile 161, puis sur une troisième presse pour former deux autres plis longitudinaux P4 et P5 (Figure 13C) dans les ailes 161 et 162, et sur une quatrième presse pour former des plis P6 et P7 dans les ailes 161 et 162 (Figure 13D) qui sont en final refermées pour former un profilé 190 comportant deux caissons 163 et 164 délimités par les ailes 161 et 162 qui constituent les parois antérieures des caissons, et par l'âme 160 qui sépare les deux caissons. Ainsi, le profilé est réalisé par une succession de pliages progressifs. Dans la mesure où les flans sont découpés aux dimensions de la poutre, il n'est pas nécessaire de réaliser un découpage pour mise à longueur.

Les caissons sont rigidifiés par fermeture rigide en utilisant tout procédé adapté de type soudure continue ou discontinue ou tout type de procédé de liaison mécanique de type agrafage, plissage/sertissage, clinchage ou autres. Ces moyens de liaison peuvent être utilisés quel que soit le procédé de mise en forme. Cette opération de fermeture rigide peut être soit intégré au processus de mise en forme, soit effectuée en final, après l'opération de pliage, en dehors de l'installation de pliage.

## Revendications

1. Ensemble comprenant une traverse de planche de bord de véhicule automobile, du type comprenant une poutre (4) allongée formant au moins un tronçon de la traverse, la poutre (4) étant formée à partir d'un profilé (19, 76, 78, 80, 84) ouvert obtenu par cintrage longitudinal d'une bande métallique (56) pour obtenir un profilé de section déterminée, et au moins un conduit d'air (42, 48) d'un système de climatisation du véhicule automobile,
**caractérisé en ce que** le profilé (19, 84) présente une section définissant au moins deux canaux (20, 22) juxtaposés, s'étendant parallèlement l'un à l'autre suivant la longueur du profilé (19, 84), au moins un canal (20) présentant une section ouverte, et au moins un canal (22) présentant une section fermée, et **en ce que** le ou chaque conduit d'air (42, 48) s'étend dans le canal ouvert (20) formant cavité de réception pour le ou chaque conduit d'air (42, 48).

2. Ensemble selon la revendication 1, **caractérisé en ce que** le canal ouvert (20) est délimité par une portion à section en « U » du profilé (19), et le canal fermé est délimité par une portion à section en « O » (22) du profilé (19).

3. Ensemble selon l'une des revendications 1 et 2, **caractérisé en ce que** le canal ouvert (20) et le canal fermé (22) sont délimités par au moins une paroi (27) commune.

4. Ensemble selon l'une quelconque des revendications précédentes, **caractérisé en ce que** le profilé (19) présente, dans un plan de section transversale, une épaisseur variable.

5. Ensemble selon l'une quelconque des revendications précédentes, **caractérisé en ce que** la traverse comprend, sur un autre tronçon de la traverse, une poutre intermédiaire (52) fixée à ladite poutre (4).

6. Procédé de fabrication d'un ensemble selon l'une quelconque des revendications 1 à 5, dans lequel on forme un profilé (19,190) à partir d'une bande (56) ou d'un flan (156) métallique que l'on plie selon une pluralité de lignes longitudinales (L1 à L5 ; P1 à P7) pour former la poutre (4).

7. Procédé selon la revendication 6, dans lequel on referme au moins en partie le profilé (19, 190), de façon à obtenir une section définissant au moins un canal fermé (22), en utilisant un moyen de liaison continu ou discontinu, par exemple du type agrafage, pliage/sertissage, clinchage, soudage, pendant le processus de mise en forme du profilé ou après.

8. Procédé selon la revendication 6, ou la revendication 7, **caractérisé en ce que** l'on forme un profilé (19) à partir d'une bande métallique (56) que l'on déplace longitudinalement en continu à travers une machine (54) à cintrer à rouleaux de façon à cintrer progressivement la bande métallique (56) suivant des lignes longitudinales (L1 à L5) pour obtenir un profilé (19) de section déterminée, et on prélève un tronçon du profilé (19) pour former la poutre (4).

9. Procédé selon la revendication 8, dans lequel on referme le profilé (19) au moyen d'une soudure (40) longitudinale formée en continu sur le profilé (19) défilant longitudinalement en sortie de la machine à cintrer (54), avant de tronçonner la poutre (4).

10. Procédé selon la revendication 6 ou la revendication 7, **caractérisé en ce que** l'on forme le profilé (190) à partir d'un flan (156) découpé au format de la poutre, que l'on fait passer à travers une succession de presses d'emboutissage (158) de façon à plier progressivement le flan (156) selon des lignes de pliage (P1 à P7) pour obtenir un profilé (19) de section déterminée, qui constitue la poutre (4).

11. Procédé selon l'une quelconque des revendications 6 à 10, dans lequel on ménage des ouvertures (50, 74) réparties suivant au moins une ligne longitudinale, sur la bande (56), avant de cintrer la bande (56), de façon à obtenir une poutre (4) munie d'ouvertures réparties sur sa longueur.

12. Procédé selon l'une quelconque des revendications 6 à 11, dans lequel la bande (56) ou le flan (156) est formée par au moins deux bandes d'épaisseur différentes fixées mutuellement suivant leurs bords longitudinaux, de sorte que le profilé (19) présente, dans un plan de section, une épaisseur variable.

## Claims

1. An assembly comprising a motor vehicle dashboard cross-member of the type comprising an elongate beam (4) forming at least one segment of the cross-member, the beam (4) being formed from an open section member (19, 76, 78, 80, 84) formed by longitudinally bending a metal strip (56) in order to obtain a member of determined section, and at least one air duct (42, 48) of a motor vehicle air conditioning system,
**characterized in that** the section member (19, 84) presents a section defining at least two juxtaposed channels (20, 22) extending parallel to each other along the length of the section member (19, 84), at least one channel (20) presenting a section that is open, and at least one channel (22) presenting a section that is closed, the or each air duct (42, 48) extending in the open channel (20) that forms a cavity for receiving the or each air duct (42, 48).

2. A cross-member according to claim 1, **characterized in that** the open channel (20) is defined by a channel-section portion of the section member (19) that has a U-shaped section, and the closed channel is defined by a portion of the section member (19) that has an O-shaped section (22).

3. A cross-member according to claim 1 or claim 2, **characterized in that** the open channel (20) and the closed channel (22) are defined by at least one wall (27) in common.

4. A cross-member according to any preceding claim, **characterized in that** the section member (19) presents varying thickness in a cross-section plane.

5. A cross-member according to any preceding claim, **characterized in that**, over another segment of the cross-member, it includes an intermediate beam (52) fastened to said beam (4).

6. A method of fabricating an assembly according to any one of claims 1 to 5, in which a section member (19, 190) is formed from a metal strip (56) or blank (156) that is folded along a plurality of longitudinal lines (L1 to L5; P1 to P7).

7. A method according to claim 6, in which the section member (19, 190) is closed at least in part so as to obtain a section defining at least one closed channel (22) by using continuous or discontinuous connection means, e.g. of the stapling, folding/crimping, pinching, or welding types, either during the process of shaping the section member, or subsequently.

8. A method according to claim 6 or claim 7, **characterized in that** a section member (19) is formed from a metal strip (56) that is moved longitudinally continuously through a roller bending machine (54) so as to bend the metal strip (56) progressively along longitudinal lines (L1 to L5) so as to obtain a section member (19) of determined section, and a segment is taken from the section member (19) in order to form the beam (4).

9. A method according to claim 8, in which the section member (19) is closed by means of a longitudinal weld (40) formed continuously along the section member (19) traveling longitudinally at the outlet from the bending machine (54), prior to cutting off the beam (4).

10. A method according to claim 6 or claim 7, **characterized in that** the section member (190) is formed from a blank (156) cut to the format of the beam, which blank is allowed to pass through a succession of folding presses (158) so as to fold the blank (156) progressively along fold lines (P1 to P7) in order to obtain a section member (19) of determined section, constituting the beam (4).

11. A method according to any one of claims 6 to 10, in which openings (50, 74) distributed along at least one longitudinal line are formed in the strip (56) prior to bending the strip (56) so as to obtain a beam (4) provided with openings distributed along its length.

12. A method according to any one of claims 6 to 11, in which the strip (56) or the blank (156) is formed by at least two strips of different thicknesses assembled together along their longitudinal edges, so that the section member (19) presents varying thickness in a section plane.

## Patentansprüche

1. Baugruppe, die einen Armaturenbrett-Querträger für ein Kraftfahrzeug aufweist, des Typs, der aufweist: einen länglichen Träger (4), der mindestens einen Teilabschnitt des Querträgers ausbildet, wobei der Träger (4) aus einem offenen Profilblech (19, 76, 78, 80, 84) geformt ist, das durch Längsbiegen eines Metallbandes (56) erhalten wird, um ein Profilblech mit einem bestimmten Querschnitt zu erhalten, und mindestens einen Luftkanal (42, 48) eines Klimatisierungssystems des Kraftfahrzeugs,
**dadurch gekennzeichnet, dass** das Profilblech (19, 84) einen Querschnitt hat, der mindestens zwei nebeneinanderliegende Kanäle (20, 22) definiert, die sich entlang der Länge des Profilblechs (19, 84) parallel zueinander erstrecken, wobei mindestens ein Kanal (20) einen offenen Querschnitt hat und mindestens ein Kanal (22) einen geschlossenen Querschnitt hat, und dass der oder jeder Luftkanal (42, 48) sich in dem offenen Kanal (20) erstreckt, der eine Aufnahmevertiefung für den oder jeden Luftkanal (42, 48) ausbildet.

2. Baugruppe gemäß Anspruch 1, **dadurch gekennzeichnet, dass** der offene Kanal (20) durch einen Abschnitt des Profilblechs (19) mit einem "U"-Querschnitt begrenzt ist, und dass der geschlossene Kanal durch einen Abschnitt des Profilblechs (19) mit einem "O"-Querschnitt (22) begrenzt ist.

3. Baugruppe gemäß einem der Ansprüche 1 und 2, **dadurch gekennzeichnet, dass** der offene Kanal (20) und der geschlossene Kanal (22) durch mindestens eine gemeinsame Wand (27) begrenzt sind.

4. Baugruppe gemäß einem der vorhergehenden Ansprüche, **dadurch gekennzeichnet, dass** das Profilblech (19) in einer Querschnittsebene eine variable Dicke hat.

5. Baugruppe gemäß einem der vorhergehenden Ansprüche, **dadurch gekennzeichnet, dass** der Querträger an einem anderen Teilabschnitt des Querträgers einen an dem Träger (4) befestigten Zwischenträger (52) aufweist.

6. Verfahren zum Herstellen einer Baugruppe gemäß einem der Ansprüche 1 bis 5, wobei aus einem Band (56) oder einem Rohling (156) aus Metall, das/der entlang einer Mehrzahl von Längslinien (L1 bis L5, P1 bis P7) gefaltet wird, um den Träger (4) auszubilden, ein Profilblech (19, 190) geformt wird.

7. Verfahren gemäß Anspruch 6, wobei das Profilblech (19, 190) zumindest teilweise wieder geschlossen wird, so dass ein Querschnitt erhalten wird, der mindestens einen geschlossenen Kanal (22) definiert, wobei während des Formungsprozesses des Profilblechs oder anschließend ein fortlaufendes oder unterbrochenes Verbindungsmittel verwendet wird, zum Beispiel des Typs einer Falzung, Faltung/Bördelung, Durchsetzfügung, Schweißung.

8. Verfahren gemäß Anspruch 6 oder Anspruch 7, **dadurch gekennzeichnet, dass** das Profilblech (19) aus einem Metallband (56) geformt wird, das fortlaufend in Längsrichtung durch eine Walzen-Biegemaschine (54) hindurchbewegt wird, so dass das Metallband (56) entlang Längslinien (L1 bis L5) nach und nach umgebogen wird, um ein Profilblech (19) mit einem bestimmten Querschnitt zu erhalten, und dass ein Teilabschnitt des Profilblechs (19) dazu herangezogen wird, den Träger (4) auszubilden.

9. Verfahren gemäß Anspruch 8, wobei das Profilblech (19) mittels einer Längsschweißung (40), die fortlaufend an dem Profilblech (19) ausgebildet wird, das am Ausgang der Biegemaschine (54) in Längsrichtung vorbeiläuft, wieder geschlossen wird, bevor der Träger (4) in Teilabschnitte aufgeteilt wird.

10. Verfahren gemäß Anspruch 6 oder Anspruch 7, **dadurch gekennzeichnet, dass** das Profilblech (190) aus einem im Format des Trägers ausgeschnittenen Rohling (156) gebildet wird, der durch eine Folge von Tiefziehpressen (158) hindurchgeführt wird, um den Rohling (156) entlang von Faltlinien (P1 bis P7) schrittweise zu falten, um ein den Träger (4) ausbildendes Profilblech (19) mit einem bestimmten Querschnitt zu erhalten.

11. Verfahren gemäß einem der Ansprüche 6 bis 10, wobei Öffnungen (50, 74), die entlang mindestens einer Längslinie verteilt sind, auf das Band (56) aufgebracht werden, bevor das Band (56) umgebogen wird, um einen Träger (4) zu erhalten, der mit über seine Länge verteilten Öffnungen versehen ist.

12. Verfahren gemäß einem der Ansprüche 6 bis 11, wobei das Band (56) oder der Rohling (156) durch mindestens zwei Bänder mit unterschiedlicher Dicke gebildet wird, die entlang ihren Längsrändern aneinander befestigt sind, so dass das Profilblech (19) in einer Querschnittsebene eine variable Dicke hat.
